# EUROPÄISCHE PATENTANMELDUNG

(11) **EP 3 881 987 A1**
(43) Veröffentlichungstag der Anmeldung: **22.09.2021**
(21) Anmeldenummer: 21000016.2
(22) Anmeldetag: 20.01.2021
(51) Int. Cl.: B25J 11/00, B25J 15/00, B25J 15/12

(54) **GREIFELEMENT UND ROBOTERARM ODER UNTERSTÜTZTUNGSHILFE ODER ASSISTENZSYSTEM**

(30) Priorität: 18.03.2020 DE 202020001067 U
(71) Anmelder: ACCREA Engineering, 20-143 Lublin (PL)
(72) Erfinder: Stanczyk, Bartlomiej, 20-143 Lublin (PL)
(74) Vertreter: Schuhmann, Albrecht

(57) **Zusammenfassung**

Greifelement und Roboterarm oder Unterstützungshilfe insbesondere als transportabler Roboterarm mit einer Halteeinrichtung einem ersten Armausleger der mit zwei angetriebenen, Drehgelenken mit der Halteeinrichtung verbunden ist und einem zweiten Armauslager der mit zwei angetriebenen, Drehgelenken mit dem ersten Armausleger verbunden ist an dessen Ende ein Greifelement mittels zwei angetriebenen Drehgelenken angeordnet ist, wobei wenigstens die zwei angetriebenen Drehgelenke, mittels welcher das Greifelement am Ende des zweiten Armauslagers angebracht ist, im Wesentlichen senkrecht zueinander in einem Winkel von 90 Grad angeordnet sind und das Greifelement mit wenigstens zwei angetriebenen Fingern mit beweglich am Finger angeordneten Fingerspitzen ausgerüstet ist.

## Beschreibung

Die vorliegende Erfindung betrifft ein Greifelement und einen Roboterarm oder eine Unterstützungshilfe. Insbesondere betrifft die Erfindung einen Roboterarm mit Greifelement zur Unterstützung von Menschen mit Handikap die ihre Arme und/oder Hände nicht oder nur noch sehr eingeschränkt bewegen können.

Insbesondere Betrifft die Erfindung einen Roboterarm für behinderte Menschen welcher an einem festen Objekt oder an einem Rollstuhl befestigt und mitgeführt werden kann und den Anwender in Form eines Armersatzes oder Greifmittels unterstützt. Hierbei gibt es verschiedene Systeme welche beispielsweise eine Greiffunktion ermöglichen und die Steuerung des Anwenders mittels Mund- oder Kopfsteuerung ermöglichen.

Bei den bekannten Roboterarmen oder Armersatz- Systemen gibt es Probleme mit dem sicheren Greifen und bei verschiedenen Bewegungen des Greifelementes und der Steuerung der einzelnen Systeme des Roboterarms, insbesondere der Greifvorrichtungen oder der Unterstützungshilfe.

Aufgabe der vorliegenden Erfindung ist es, ein Greifelement und Roboterarm oder eine Unterstützungshilfe zur Verfügung zu stellen welches die Probleme vermindert und die Handhabe und Funktion verbessert und gleichzeitig kompakt und zuverlässig ist.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Greifelement und Roboterarm oder eine Unterstützungshilfe insbesondere als transportabler Roboterarm mit einer Halteeinrichtung einem ersten Armausleger der mit zwei angetriebenen, Drehgelenken mit der Halteeinrichtung verbunden ist und einem zweiten Armauslager der mit zwei angetriebenen, Drehgelenken mit dem ersten Armausleger verbunden ist an dessen Ende ein Greifelement mittels zwei angetriebenen Drehgelenken angeordnet ist, wobei wenigstens die zwei angetriebenen Drehgelenke, mittels welcher das Greifelement am Ende des zweiten Armauslagers angebracht ist, im Wesentlichen senkrecht zueinander in einem Winkel von 90 Grad angeordnet sind und das Greifelement mit wenigstens zwei angetriebenen Fingern mit beweglich am Finger angeordneten Fingerspitzen ausgerüstet ist.

Die Fingerspitzen sind dabei in der bevorzugten Ausführung zu einem auswechselbar ausgeführt und in einem wenigstens teilelastischen oder nachgebenden Material ausgeführt. Dies führt zu einem zu einem verbesserten Greifergebnis des Greifelements welches in der Praxis die Hand des Patienten ersetzt da dadurch die Kontaktkraft zwischen dem Finger bzw. der Fingerspitze und dem aufzunehmenden Gegenstand erhöht wird. Zum anderen führt die teilelastische Ausführung wenigstens der Fingerenden bzw. Fingerspitzen dazu, dass diese nicht so leicht brechen oder deren Befestigung zerstört werden da beispielsweise Stöße des Greifelementes gegen feste Objekte wie beispielsweise Türen oder Möbel durch die teilelastisch ausgeführten Finger absorbiert werden. Hierdurch wird auch der Antrieb der Finger, wie der Motor und/oder ein Getriebe geschont und es können häufige und teure Reparaturen des Greifelements verhindert werden was zur Entlastung sowohl des Patienten, wie auch des Versorgers führt.

In einer bevorzugten Ausführung der Erfindung ist das Greifelement mit drei angetriebenen Fingern ausgerüstet wobei diese derart angeordnet sind, dass ein einzelner Finger den beiden gegenüberliegenden Fingern derart gegenüberliegt, dass dieser zu den beiden gegenüberliegenden Fingern mittig ausgerichtet angeordnet ist. Die angetriebenen Finger werden dabei bevorzugt von einem einzelnen Motor mit einem dafür angepassten Getriebe, welches im Gehäuse des Greifelements integriert ist, angetrieben oder bewegt. Auch hierbei ergibt sich durch den Einsatz nur eines Antriebes eine Verbesserung hinsichtlich der benötigen Abmaße und der Wirtschaftlichkeit des erfindungsgemäßen Systems.

Der gesamte erfindungsgemäße Roboterarm mit Greifelement ist an seinem, dem Greifelement abgewandten Ende mit einer Halteeinrichtung ausgerüstet, mittels welcher der Roboterarm mit Greifelement an einem festen Objekt anbringbar, aber auch beispielsweise an einem Rollstuhl montierbar und somit mitführbar ist. Der Roboterarm ist dabei mit einem ersten Armausleger, der mit zwei angetriebenen Drehgelenken mit der Halteeinrichtung verbunden ist, ausgerüstet. An diesen ersten Armausleger schließt sich, wieder verbunden mit zwei Drehgelenken, ein zweiter, kürzerer als der erste Armausleger an, and dessen anderem Ende das Greifelement, wieder mittels zweier Drehgelenke angeordnet ist. Der gesamte, derart ausgebildete Roboterarm kann somit im Wesentlichen eine Distanz der Länger der beiden zusammengerechneten Längen des ersten und des zweiten Armauslegers überbrücken. Der erste, an die Halteeinrichtung angrenzende, längere Armausleger ist dabei derart ausgebildet, dass er auf seiner einen Oberflächenseite eine Ausbuchtung oder Ausklinkung aufweist in welche der zweite Armauslager einschwenken kann. Hierdurch bleibt das Roboterarmsystem sehr kompakt und durch den geringeren Materialeinsatz auch deutlich leichter als bekannte Roboterarme. Ebenfalls zu einer leichten und kompakten Ausführung des gesamten Roboterarmsystems mit Greifelement trägt eine relativ kompakte Halteeinrichtung mit niedriger Höhe, welche bevorzugt nicht höher als 25-30 cm ausgeführt ist, bei. Damit bleibt zum einen das gesamte System relativ leicht und kompakt und ermöglicht unter anderem, insbesondere bei der Montage an einem Rollstuhl, das Greifen und/oder Aufheben von Gegenständen am Boden oder in Bodennähe.

Im Folgenden wird die vorliegende Erfindung anhand von Zeichnungen beispielhaft näher beschrieben. Dabei zeigen:
- Fig. 1: eine perspektivische Ansicht eines Greifelements und Roboterarm.
- Fig. 2: eine perspektivische Darstellung eines Fingers.
- Fig. 3: eine Darstellung des Greifelements mit Fingern.
- Fig. 4: eine Darstellung des Fingers an einem Objekt.

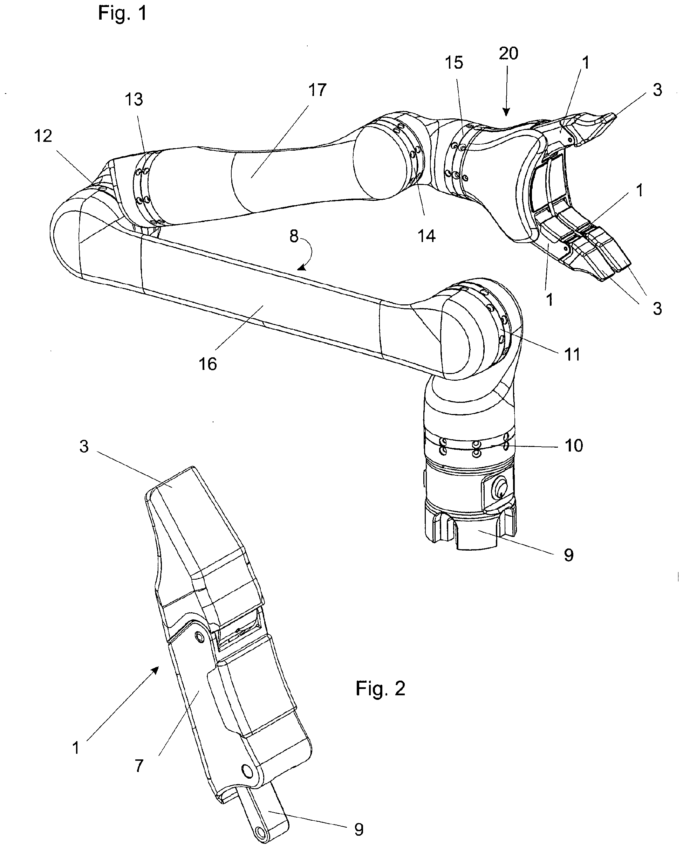

Wie in den Fig. 1 bis Fig. 4 gezeigt, ist das Roboterarmsystem mit einem Greifelement 20 ausgerüstet. Diese sind in der hier gezeigten Ausführung mit drei Fingern 1 ausgerüstet, die Finger selbst sind in Grundelemente 7, welche in dem Griffelement 20 angeordnet und mittels einer Antriebshandhabe 9 mit einem Motor 5 und/oder einem Getriebe 6 verbunden sind und endseitigen Fingerspitzen 3 ausgerüstet.

Die Fingerspitzen 3 sind dabei, wie beispielsweise in der Fig. 2 dargestellt, beweglich an den Fingergrundelementen 7 auswechselbar, bevorzugt einstellbar, angeordnet und in bevorzugt teilelastischem Material vorgesehen. Durch die bevorzugte Fingerstellung, wie in Fig. 1 gezeigt, mit drei Fingern, wobei der einzelne Finger mittig zu den beiden gegenüberliegenden angeordnet ist, lassen sich sehr präzise aber mit ausreichender Haltekraft versehene Greif- und/oder Handhabevorgänge realisieren. Wie in der Fig. 1 gezeigt, ist das Roboterarmsystem sehr kompakt ausgeführt, da der zweite Armausleger 17 zusammen mit seinen, an jedem Ende angeordneten Drehpunkten 13, 14 beim Einschwenken, wenigstens zu einem großen Teil in eine Ausbuchtung 8 auf der Rückseite der dargestellten Oberfläche des ersten Armauslegers 16 einschwenken kann. Das Greifelement 20 ist durch den Einsatz von nur einem Motor 5 und einem bedarfsgerecht ausgebildetem Getriebe 6 ebenfalls sehr kompakt und Gewichts- optimiert ausgebildet. In einer weiteren bevorzugten Ausbildung ist die Steuerung für die Antriebe ausgelagert und in einer Kontrollvorrichtung und/oder beispielweise in oder an der Steuerungseinheit beispielsweise eines Rollstuhls vorgesehen oder adaptiert. Insbesondere durch die Anordnung der Finger 1 mit deren angetriebenen Grundelementen 7 und den wenigstens teilelastischen Fingerspitzen 3 lassen sich sehr sichere und für den Anwender einfach zu bedienende Greifeigenschaften erreichen. Die teilelastischen Fingerspitzen 3 führen zum einem zu einem verbesserten aber schonenden Griff des gesamten Griffelements, wie auch zu weniger Anfälligkeit des gesamten Roboterarmsystems mit Greifelement gegen Stöße.

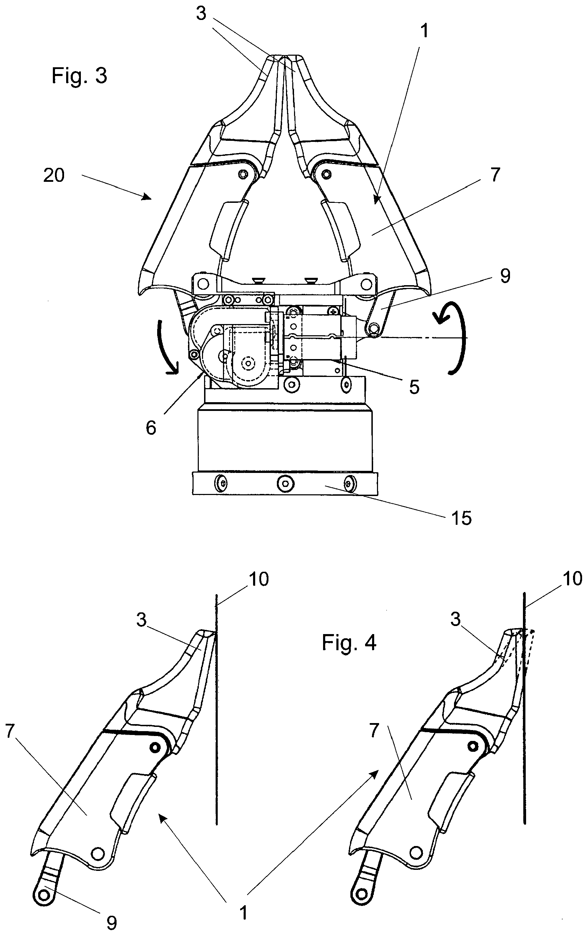

Aufgrund der möglichen Deformierung, wie in Fig. 4 gezeigt, der elastischen Fingerspitzen 3 beim Anstoßen an oder auf feste Objekte 10 wird eine Verbesserung des Greifvorgangs erreicht aber auch die gesamten Komponenten des Robotersystems, insbesondere die Finger 1, 3 sowie der Motor 5 und das Getriebe 6 gegen Bruch und/oder Überlastung geschont.

Nachdem bevorzugte Ausführungen der Erfindung in Bezug auf die beiliegenden Zeichnungen beschrieben wurden, ist festzuhalten, dass die Erfindung nicht auf diese genauen Ausführungen und Anwendungsfälle beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Greifelement und Roboterarm oder Unterstützungshilfe insbesondere als transportabler Roboterarm mit einer Halteeinrichtung (9) einem ersten Armausleger (16) der mit zwei angetriebenen, Drehgelenken (10, 11) mit der Halteeinrichtung (9) verbunden ist und einem zweiten Armauslager (17) der mit zwei angetriebenen, Drehgelenken (12, 13) mit dem ersten Armausleger (16) verbunden ist an dessen Ende ein Greifelement (20) mittels zwei angetriebenen Drehgelenken (14, 15) angeordnet ist,
dadurch gekekennzeichnet,
dass wenigstens die zwei angetriebenen Drehgelenke (14, 15), mittels welcher das Greifelement (20) am Ende des zweiten Armauslagers (17) angebracht ist, im Wesentlichen senkrecht zueinander in einem Winkel von 90 Grad angeordnet sind und das Greifelement (20) mit wenigstens zwei angetriebenen Fingern (1) mit beweglich am Finger (1) angeordneten Fingerspitzen (3) ausgerüstet ist.

2. Greifelement und Roboterarm nach Anspruch 1,
**dadurch gekekennzeichnet,**
dass die Fingerspitzen (3) in einem wenigstens teilelastischen Material ausgebildet sind.

3. Greifelement und Roboterarm nach Anspruch 1,
dadurch gekekennzeichnet,
dass das Greifelement mit wenigstens zwei angetriebenen Fingern mit beweglich am Finger (1) angeordneten Fingerspitzen (3) ausgebildet ist.

4. Greifelement und Roboterarm nach Anspruch 1 und 3,
dadurch gekekennzeichnet,
dass die wenigstens zwei angetriebenen Finger mittels eines einzigen, im Greifelement angeordneten, Motor (5) mit einem Getriebe (6), bewegbar oder ansteuerbar sind.

5. Greifelement und Roboterarm nach Anspruch 1,
**dadurch gekekennzeichnet,**
dass der erste Armausleger (16) länger ausgebildet ist als der zweite Armausleger (17).

6. Greifelement und Roboterarm nach Anspruch 1 und 5,
dadurch gekekennzeichnet,
dass der erste Armausleger (16) länger ausgebildet ist als der zweite Armausleger (17) und einseitig eine Ausbuchtung (8) oder Ausschnitt aufweist in welche der zweite Armausleger (17) einschwenkbar ist.

7. Greifelement und Roboterarm nach Anspruch 1,
dadurch gekekennzeichnet,
dass die Halteeinrichtung (9) für den Roboterarm und dem Greifelement an einem Rollstuhl anbringbar ausgeführt ist.

8. Greifelement und Roboterarm nach Anspruch 1,
**dadurch gekekennzeichnet,**
dass die Halteeinrichtung (9) für den Roboterarm und dem Greifelement an einem festen Objekt und/oder auf einer Tischplatte anbringbar ausgeführt ist.

9. Greifelement und Roboterarm nach Anspruch 1 und 2,
dadurch gekekennzeichnet,
dass die Fingerspitzen (3) in einem haftenden Material ausgeführt oder mit einer haftenden Beschichtung ausgerüstet sind.

10. Greifelement und Roboterarm nach Anspruch 1,
**dadurch gekekennzeichnet,**
dass das Greifelement drei Finger aufweist die derart angeordnet sind, dass der einzelne Finger, zu den beiden anderen gegenüberliegenden Fingern mittig zu diesen angeordnet ist.

11. Greifelement und Roboterarm nach Anspruch 1,
**dadurch gekekennzeichnet,**
dass die Fingerspitzen (3) in einer Signalfarbe ausgebildet sind.
